# EUROPEAN PATENT APPLICATION

(11) **EP 4 527 207 A1**
(43) Date of publication of application: **26.03.2025**
(21) Application number: 23199474.0
(22) Date of filing: 25.09.2023
(51) Int. Cl.: A23G 1/12, A23G 3/02, B02C 17/16, B02C 19/00

(54) **AGITATOR MILL, IN PARTICULAR A BALL MILL, FOR REFINING PARTICULATE MATTER**

(71) Applicant: Royal Duyvis Wiener B.V., 1541 KD Koog aan de Zaan (NL)
(72) Inventor: The designation of the inventor has not yet been filed
(74) Representative: De Vries & Metman

(57) **Abstract**

The invention relates to an agitator mill, in particular a ball mill (1), for refining, e.g. grinding and/or mixing, particulate matter, such as cocoa, chocolate, compound, pigment or paint, the mill (1) comprising a casing (2) for holding a refining medium, the particulate matter, and an agitator (3) for stirring the refining medium to comminute the particulate matter, and a motor (4) for rotatably driving the agitator (3). The motor (4) is a permanent magnet motor (4).

## Description

The present invention relates to an agitator mill, in particular a ball mill, for refining, e.g. grinding and/or mixing, particulate matter, such as cocoa, chocolate, compound, pigment or paint. The mill comprises a casing, in the trade also referred to as tank, container, or grinding vessel, for holding a refining medium, e.g. balls, such as steel balls, often bearing balls, the particulate matter, and an agitator, also known as stirrer, e.g. comprising a central shaft with radial arms, such as bars or rods, for stirring the refining medium to comminute the particulate matter. In a vertical mill, the particulate matter typically flows from (an inlet in) the bottom of the casing to (an outlet in) the top. The agitator further comprises a motor, in particular an electric motor, for rotatably driving the agitator, and a bottom, typically sealing the lower or far end of the casing and provided with an inlet. The invention also relates to a method of servicing an agitator mill.

Ball mills for refining cocoa and chocolate are known in the art.

WO 2009/121973 relates to a device for producing chocolate by mixing and grinding ingredients, such as cacao mass, cacao butter, sugar and/or milk powder, comprising a mixer, a grinder, and means for passing the obtained mixture from the mixer to the grinder. "The grinder 4 comprises a stirrer-type ball mill 4, known in itself and in turn comprising a cylindrical vessel 19 filled with, e.g., hardened steel balls (not shown), and a central shaft 20 provided with radially extending stirring arms 21 and operatively coupled to a motor 22."

WO 2012/146287 relates to an agitator mill (reference sign 1 in WO 2012/146287) which is used for grinding material to be ground and mixed, in particular for very fine grinding of cocoa and cocoa masses, comprising a substantially cylindrical or conical grinding container (2), having a cylinder or cone axis which is oriented vertically in operation and the casing (4) of which container is in particular double-walled. The agitator mill (1) has an inner casing surface and a rotatably mounted agitator (6), comprising a shaft, which can be connected to a drive unit mounted in particular on a machine frame of the agitator mill, and agitator tools (8), wherein at least one indicator (9) for indicating the wear on the inner casing surface is disposed in the casing of the grinding container.

It is an object of the present invention to provide an agitator mill that is more compact and/or that facilitates servicing.

To this end, the agitator mill according to the present invention is characterized in that the motor is a permanent magnet motor, preferably a permanent magnet synchronous motor.

Permanent magnet motors were found to enable efficient operation and a compact and more straight-forward design of agitator mills, in particular if the motor directly drives the agitator, i.e. without a transmission, such as an angled transmission or a reduction, in turn facilitating maintenance, as will be explained in more detail below. In an embodiment, the rotational axis of the rotor of the motor and the rotational axis of the agitator are aligned and e.g. the agitator is fixedly attached to and/or forms an extension of the rotor.

In an embodiment, the agitator mill comprises a controller to control the rotational speed of the motor, e.g. by sinusoidal signal and/or frequency, and thus of the directly driven agitator, to within a range of 100 to 300 revolutions per minute (rpm), preferably to within a range of 150 to 270 rpm, preferably to within a range of 170 to 250 rpm.

In an embodiment, the motor has a rated power of at least 50 kiloWatt (kW) and/or a torque of at least 1500 Newtonmeter (Nm), preferably at least 2500 Nm, e.g. a startup torque of 9000 Nm and an operating (refining) torque of 3000 Nm.

In an embodiment, the motor and/or a housing of the motor is/are attached to one end of the casing by means of a bell housing. In a embodiment, to prevent detrimental effects on the motor of vapor(s) rising up from the particulate matter, such as cocoa mass, in the casing and/or to isolate the matter in the casing from the motor, the agitator mill comprises an airtight seal between the motor and the casing. In a refinement, the bell housing comprises two compartments, one in fluid communication with the casing, the other with the motor. In an example, the compartments are separated e.g. by a baffle that preferably seals against the rotor of the motor, to the agitator shaft, or to a coupler between the rotor and the shaft. In a refinement, the bell housing comprises an outflow opening for the particulate matter.

In a refinement, the seal is a pressure seal, capable of withstanding a pressure of at least 1 bar in the top section of the casing.

In an embodiment, the refining medium, such as balls, are loose in the casing, i.e. are not positively guided or supported by e.g. partition means such as those described in US 3,709,442 (discussed below).

The present invention is applicable in agitator mills having a horizontally oriented, an inclined or a vertically oriented casing. In an embodiment, the casing extends vertically, the motor is placed on top of the casing and the wall of the casing serves as a torque support for the motor. During operation, in particular during start-up, the casing transmits the reaction torque of the stator and/or housing of the motor to the base, e.g. comprising a floor plate or foundation plate, of the mill. The agitator mill according to the present invention allows a relatively small foot print and/or a relatively straightforward design, e.g. by dispensing with a reduction between the motor and the agitator.

The mill can be single walled, in the sense that the wall that defines the refining cavity (exclusive of customary layers for cooling and insulation that do not significantly contribute to the structural integrity of the mill) is already sufficiently strong to transmit the reaction torque of the motor.

In an embodiment, the casing comprises an inner wall and an additional wall, e.g. an outer or intermediate wall. In a refinement, the inner wall and the additional wall are attached to each other, e.g. by top and bottom rings.

In a particularly reliable embodiment, the additional wall is dimensioned to transmit at least 50%, preferably at least 80%, preferably 100% of the reaction torque of (the housing of) the motor to the bottom of the mill. I.e., in the latter embodiment (100%), the additional wall alone is sufficiently strong to transmit the total reaction torque of the motor to the base, even if the inner wall is worn and no longer capable of reliably transmitting the torque of the motor.

In an embodiment, the additional wall is made of metal, e.g. steel, in particular stainless steel, and/or has a wall thickness of at least 1 millimeter (mm), preferably at least 2 mm, preferably at least 3 mm, preferably in a range from 3 to 15 mm, preferably in a range from 4 to 10 mm.

In an embodiment, to enhance transmission of the reaction torque of the motor, the walls are cylindrical, preferably circle cylindrical, or conical and/or concentric, preferably also with the rotational axis of the agitator and the rotor of the motor.

It is preferred that the total thickness of the wall of the casing, including the inner wall, the additional wall, and any cooling means and insulation material, e.g. between the inner wall and the additional wall, is less than 15 cm, e.g. in a range from 4 to 12 cm.

In another embodiment, at least part, preferably most, optionally all of the weight of the agitator is suspended, e.g. via a coupler, from the rotor of the motor.

In another embodiment, the bottom of the agitator mill comprises a base that in turn is or can be fixed to a floor or floor plate or foundation.

In another embodiment, the weight of the motor is carried (borne) by the casing. In such embodiments, no separate frame required.

The present agitator mill allows configurations that provide efficient maintenance, in particular if the casing is detachably mounted, e.g. bolted, to the housing of the motor or to the bell housing and/or the agitator is detachably mounted, e.g. bolted, preferably via a coupler, to the rotor of the motor.

The invention also relates to a method of servicing an agitator mill according to the present invention, comprising the steps of suspending, preferably vertically, the agitator mill, e.g. by means a hoist or a lift, detaching the casing from the motor or from the bell housing, detaching the agitator from the rotor of the motor, removing the casing and the agitator and attaching another, new or refurbished, casing and agitator.

In an embodiment, the casing and the agitator are removed with the refining medium and/or the agitator still in the casing.

Within the framework of the present invention, the term 'particulate matter' refers to flowable solid particles, often, but not necessarily contained in and/or mixed with a liquid.

For the sake of completeness, attention is drawn to the following patent publications.

US 3,709,442 relates to a mill for the refining of cocoa, chocolate, paints, lacquers, enamels and the like, which consists of a vertically extending stationary outer cylindrical casing, and a cylindrical rotor supported for revolvable movement concentrically within said casing. Partitions are provided on the outer wall of the rotor to form means supporting balls for rotation. The balls are thus positively guided whereby to exert a comminuting action by rolling alone. The balls as thus supported are arranged in a spiral path, defined by the partition means, extending along the outer wall of the rotor.

In US 2017/058218 "Disclosed embodiments include a feedstock preparation system that includes a solid feedstock mill including a housing having a chamber. The solid feedstock mill also includes a solids breakup assembly at least partially disposed inside the chamber. The solid feedstock mill further includes a feedstock inlet through the housing into the chamber and a plurality of feedstock outlets through the housing from the chamber."

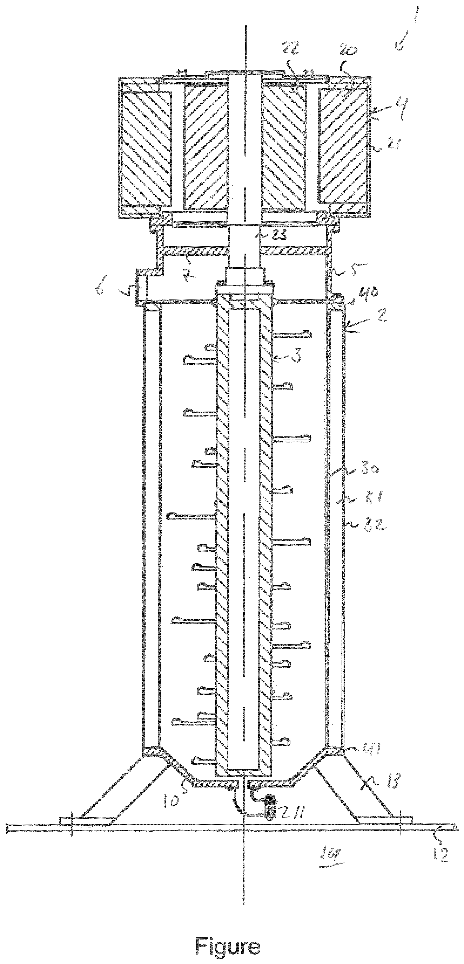

The invention will now be explained in more detail with reference to the Figure, which schematically shows a cross-section of an example of a ball mill according to the invention.

This ball mill 1 is suitable for refining cocoa mass, chocolate, or compound, and comprises a vertically extending casing 2 holding a refining medium (not shown), e.g. stainless steel balls (e.g. 1/4 inch in diameter for relatively small particles, such as in chocolate, or 3/8 inch in diameter for relatively large particles, such as in cocoa) poured into the casing, and an agitator 3, known in itself, for stirring the refining medium. An electric motor, in this example a permanent magnet synchronous motor 4, is mounted on top of and carried by the casing via a so-called bell housing 5, which is bolted to the upper rim of the casing and which is provided with an outlet opening 6 for the (then refined) particulate matter. The bell housing comprises a baffle 7 that separates the internal volume of the bell housing into two compartments.

The motor 4 comprises a controller (not shown) to control the rotational speed of the motor to within a range of 150 to 270 revolutions per minute (rpm), e.g. approximately 200 rpm. The motor has a rated power of at least 50 kiloWatt (kW), e.g. 90 kW, and a torque of at least 1500 Newtonmeter (Nm), e.g. 3000 Nm during operation and 9000 Nm during start-up.

At its lower side the casing is provided with a bottom, in this example comprising a frusto-conical plate 10 provided with an inlet opening 11 for the particulate matter. The bottom plate is attached to a floor plate 12 or foundation plate by means of a plurality, e.g. three or four, adjustable feet 13. The floor or foundation plate is secured, e.g. grouted, to the floor 14 beneath.

Aa shown in the cross-section, the motor 4 comprises a stator 20, a housing 21, and a rotor 22. The agitator is fixed, e.g. bolted via a coupler 23, to the rotor, which thus rotatably and directly drives the agitator. The baffle in the bell housing seals, by means of a pressure seal (not shown, but known in itself), against the coupler between the rotor and the shaft, to (fluidly) isolate the motor from the casing.

The casing comprises a circle-cylindrical inner wall 30 e.g. made of stainless steel, having a wall thickness in a range from 5 to 10 mm, e.g. 8 mm, and provided, on its outwardly facing surface, with cooling means, such as a so-called pillow-plate (not shown). The cooling means are enveloped by an insulation material 31, preferably material that is resistant to welding heat, such as glass wool or rock wool. An outer wall 32 envelopes the inner wall and any optional cooling means and insulation material. The outer wall is made of e.g. stainless steel and has a thickness in a range from 3 to 15 mm, e.g. 8 mm. The inner wall and the additional wall are attached to each other, e.g. by a top ring 40 and a bottom ring 41 welded to, respectively, the top and bottom rims of the inner and outer wall.

During operation, in an example, cocoa mass is fed to the inlet, e.g. at a pressure of 3 bar and a mass flow rate of 3.500 kg/h, in the bottom of the agitator mill. The agitator, operated via the controller at approximately 200 and approximately 2.500 Nm, actuates the refining medium, e.g. 2.000 kg of stainless steel balls occupying 80-90% of the internal volume of the agitator mill, thus comminuting the particles in the cocoa mass e.g. from average diameter of approximately 200 µm to a particle size distribution with 99,5% smaller than 75 µm. The heat generated during the refining is removed by cooling fluid, e.g. water flowing concurrently through the pillow plate. The refined medium exits the agitator mill through the outlet opening in the bell housing.

The reaction torque of the motor is transmitted through the bell housing, the casing, the bottom, the adjustable feet and the floor plate to the ground beneath.

The preferred agitator mill has a relatively small foot print and a relatively straightforward design. Because the agitator is essentially an extension of the rotor of the electric motor, i.e. has no reduction or angular transmission, the drive comprises less parts and reduced friction. The agitator mill is more robust and maintenance is faster and more efficient.

The invention is not limited to the embodiment as described above, which can be varied in several ways within the scope of the claims. E.g., the agitator mill according to the present invention is also suitable for refining chocolate, where particle are typically comminuted to 20-25 pm, compound (cocoa solids and vegetable fat), pigments, paints, and other particulate matters.

## Claims

1. Agitator mill, in particular a ball mill (1), for refining, e.g. grinding and/or mixing, particulate matter, such as cocoa, chocolate, compound, pigment or paint, the mill (1) comprising a casing (2) for holding a refining medium, the particulate matter, and an agitator (3) for stirring the refining medium to comminute the particulate matter, and a motor (4) for rotatably driving the agitator (3), **characterized in that** the motor (4) is a permanent magnet motor (4).

2. Agitator mill (1) according to claim 1, wherein the motor (4) directly drives the agitator (3) and/or wherein the rotational axis of the rotor (22) of the motor (4) and the rotational axis of the agitator (3) are aligned.

3. Agitator mill (1) according to claim 1 or 2, comprising a controller (8) to control the rotational speed of the motor (4) to within a range of 100 to 300 revolutions per minute (rpm), preferably to within a range of 150 to 270 rpm, preferably to within a range of 170 to 250 rpm.

4. Agitator mill (1) according to any one of the preceding claims, wherein the motor is a synchronous motor (4) and/or has a rated power of at least 50 kiloWatt (kW) and/or a torque of at least 1500 Newtonmeter (Nm), preferably at least 2500 Nm.

5. Agitator mill (1) according to any one of the preceding claims, wherein the motor (4) and/or a housing (21) of the motor (4) is/are attached to one end of the casing (2), preferably by means of a bell housing (5).

6. Agitator mill (1) according to any one of the preceding claims, comprising an airtight seal (24) between the motor (4) and the casing (2).

7. Agitator mill (1) according to claim 6, wherein the seal is a pressure seal (24), capable of withstanding a pressure of at least 1 bar in the top section of the casing (2) .

8. Agitator mill (1) according to any one of the preceding claims, wherein the refining medium, such as balls, are loose in the casing.

9. Agitator mill (1) according to any one of the preceding claims, wherein the casing (2) extends vertically, the motor (4) is placed on top of the casing (2) and the wall (30, 32) of the casing serves as a torque support for the motor.

10. Agitator mill (1) according to any one of the preceding claims, wherein the casing (2) comprises an inner wall (30) and an additional wall (32).

11. Agitator mill (1) according to claim 10, wherein the additional wall (32) is dimensioned to transmit at least 50%, preferably at least 80%, preferably 100% of the reaction torque of the motor (4) to the other end of the casing, e.g. to the bottom of the mill (1).

12. Agitator mill (1) according to claim 10 or 11, wherein the additional wall (32) is made of metal and/or has a wall thickness of at least 1 millimeter (mm), preferably at least 2 mm, preferably at least 3 mm, preferably in a range from 3 to 15 mm, preferably in a range from 4 to 10 mm.

13. Agitator mill (1) according to any one of the claims 10-12, wherein the walls (30, 32) are cylindrical, preferably circle cylindrical, or conical and/or concentric, preferably also with the rotational axis of the agitator (3) and the rotor (22) of the motor (4).

14. Agitator mill (1) according to any one of the preceding claims, wherein the weight of the motor (4) is carried (borne) by the casing (2).

15. Method of servicing an agitator mill (1) according to any one of the preceding claims, comprising the steps of suspending the agitator mill (1), detaching the casing (2) from the motor (4) or, if present, from the bell housing (6), detaching the agitator (3) from the rotor (22) of the motor (4), removing the casing (2) and the agitator (3) and attaching another casing and agitator, preferably with the refining medium and/or the agitator (3) still in the casing (2).
